# EUROPÄISCHE PATENTSCHRIFT

(11) **EP 1 429 905 B1**
(45) Veröffentlichungstag und Bekanntmachung des Hinweises auf die Patenterteilung: **11.01.2006**
(21) Anmeldenummer: 02749154.7
(22) Anmeldetag: 22.07.2002
(51) Int. Cl.: B29C 47/28, B29C 47/02, H01B 13/24, H01B 13/14

(54) **UMMANTELUNG VON LEITERBAHNEN**
ENCASING CONDUCTOR TRACKS
REVETEMENT DE PISTES CONDUCTRICES

(30) Priorität: 21.07.2001 DE 10135717
(43) Veröffentlichungstag der Anmeldung: 23.06.2004
(73) Patentinhaber: Alstom Technology Ltd, 5400 Baden (CH)
(72) Erfinder: BAUMANN, Thomas, CH-5430 Wettingen (CH); BOCK, Albrecht, 68519 Viernheim (DE); BRUEHL, Bodo, D-79761 Waldshut-Tiengen (DE); OESTERHELD, Jörg, CH-5413 Birmenstorf (CH); SCHULZ, Daniel, CH-8942 Oberriden (CH)
(86) Internationale Anmeldenummer: PCT/IB2002/002857
(87) Internationale Veröffentlichungsnummer: WO 2003/009990

(56) Entgegenhaltungen:
- FR-A- 2 565 887
- GB-A- 938 944
- US-A- 4 761 129
- US-A- 5 324 468
- US-A- 5 650 031
- PATENT ABSTRACTS OF JAPAN vol. 003, no. 067 (E-116), 9. Juni 1979 (1979-06-09) & JP 54 045785 A (NIPPON TELEGR & TELEPH CORP), 11. April 1979 (1979-04-11)
- PATENT ABSTRACTS OF JAPAN vol. 007, no. 159 (M-228), 13. Juli 1983 (1983-07-13) & JP 58 067434 A (SHIGEYA KURODA), 22. April 1983 (1983-04-22)

## Beschreibung

### Technisches Gebiet

Die Erfindung betrifft Vorrichtungen sowie ein Verfahren zur Ummantelung von Leiterbahnen, insbesondere zur Isolierung von Statorwicklungen rotierender elektrischer Maschinen.

### Stand der Technik

In vielen Bereichen der Technik ist es erforderlich, Leiter oder Leiterbahnen, die aus einem oder mehreren Einzelleitern bestehen, oder auch anderweitige Kabel mit einer Ummantelung zu versehen. Die Ummantelung kann hierbei den Zweck einer elektrischen Isolierung, einer thermischen Abschirmung, einer mechanischen Unterstützung, Kombinationen hieraus oder auch einen anderen Zweck, wie beispielsweise Abdichtung gegenüber Feuchtigkeit oder auch einfach nur eine verpackungsähnliche Funktion, erfüllen.

Statorwicklungen rotierender elektrischer Maschinen, wie beispielsweise Generatoren, bestehen in der Regel aus einer Vielzahl von Einzelstäben mit zumeist rechteckigem Leiterquerschnitt. Diese Statorwicklungen sind üblicherweise von zumindest einer Isolierung, auch als Hauptisolierung bezeichnet, ummantelt. Im Betrieb der rotierenden elektrischen Maschine ist die Isolierung einer Statorwicklung einer kombinierten Beanspruchung unterworfen. Durch die in der Wicklung infolge des Rotormagnetfeldes induzierte, teilweise sehr hohe Spannung wird die Isolierung zwischen dem Leiter und der Nutwand durch ein entsprechend der Dicke der Isolierung resultierendes elektrisches Feld dielektrisch beansprucht. Der den Stator umgebende Statorblechkörper befindet sich hierbei auf Erdpotential.

Durch die im Leiter erzeugten Strom-Wärme-Verluste ist die Isolierung zusätzlich einer thermischen Wechselbeanspruchung ausgesetzt. Im Zusammertspiel mit unterschiedlichen thermischen Ausdehnungen der beteiligten Materialien führt diese thermische Beanspruchung auch zu einer mechanischen Wechselbeanspruchung in der Isolierung sowie an der Grenzfläche zwischen dem Leiter und der Isolierung sowie auch an der Grenzfläche zwischen der Isolierung und der Nutwand. Hieraus resultiert einerseits eine Scherbeanspruchung der Verklebung der Isolierung auf dem Leiter als auch eine Gefahr der Abrasion. Neben den Beanspruchungen im Betrieb unterliegt die Isolierung auch während der Herstellung und des Einbaus in den Stator insbesondere bereits hohen mechanischen Beanspruchungen.

Um isolierende Ummantelungen für Statorwicklungen herzustellen, die unter allen Betriebsbedingungen eine ausreichende Isolierfähigkeit bei einer gleichzeitig hohen Lebensdauer gewährleisten, sind im Stand der Technik verschiedene Verfahren bekannt. Üblicherweise wird als Grundmaterial für Isolierungen von Statorwicklungen Glimmerpapier verwendet, welches oftmals durch einen zusätzlichen Glasgewebeträger mechanisch verstärkt wird. Das Glimmerpapier wird hierzu in Bandform auf die Statorleiterbahn gewickelt und anschließend mit einem Harz imprägniert. Nach Aushärten des Harzes entsteht so eine duroplastische Isolierung der Leiterbahn. Im Stand der Technik auch bekannt sind Isolierungen mit thermoplastischer Matrix, wie beispielsweise Schellack, Polysulfon und Polyetherketon, die oberhalb der Schmelztemperatur der Matrix wieder plastisch verformbar sind.

Als nachteilig dieses aus dem Stand der Technik bekannten Verfahrens zur Herstellung von Isolierungen für Statorwicklungen sind die komplizierten und zeitintensiven Fertigungsschritte zu werten, die zu erheblichen Herstellungskosten führen. Besonders zu nennen sind in diesem Zusammenhang der Wickelprozeß und der Imprägnierprozeß, die wegen der physikalischen Eigenschaften der beteiligten Materialien nicht mehr wesentlich beschleunigt werden können. Darüber hinaus ist der Fertigungsprozeß insbesondere bei sehr dicken Isolierungen oftmals fehlerbehaftet. So kann beispielsweise eine ungenaue Justierung der Wickelmaschine, beispielsweise eine Justierung unter einem Fehlwinkel zur Leiterbahn oder eine statisch wirkende Zugkraft oder auch eine dynamisch auftretende Zugkraftreduktion, eine ungenügende Isolierungsstruktur mit Falten oder auch Rissen im Glimmerpapier verursachen. Als Folge zu großen Bandauftrags in der Imprägnierform kann es auch zu Überpressungen kommen, die eine gleichmäßige Durchimprägnierung der Isolierung verhindern oder lokale Fehler mit verminderter elektrischer Kurzzeit- und/oder Langzeitfestigkeit hervorrufen.

Die gattungsbildende US 5324468 betrifft eine Vorrichtung zum Beschichten von Leitern, bei welcher der Materialzufluß zu den Extruderdüsen durch etwa mittig in den Zuleitungen angeordnete Auslaßvorrichtungen unterbrochen werden kann. Bei Unterbrechung der Beschichtung wird das zufliessende Beschichtungsmaterial über die Auslaßvorrichtungen abgeleitet. Aus der US 4761129 ist eine ähnliche Vorrichtung mit zwei Extruderdüsen bekannt, mit welcher eine Ummantelung des Leiters in zwei Schichten realisiert werden kann. Nicht benötigtes Beschichtungsmaterial wird über einen Bypass abgeleitet. Die JP-A-58067434 beschreibt eine quasi-kontinuierliche Beschichtungsvorrichtung für Bauteile, wie Tafeln, Rohre usw., wobei zwei aufeinander folgende Bauteile mit einer gemeinsamen Ummantelung versehen werden.

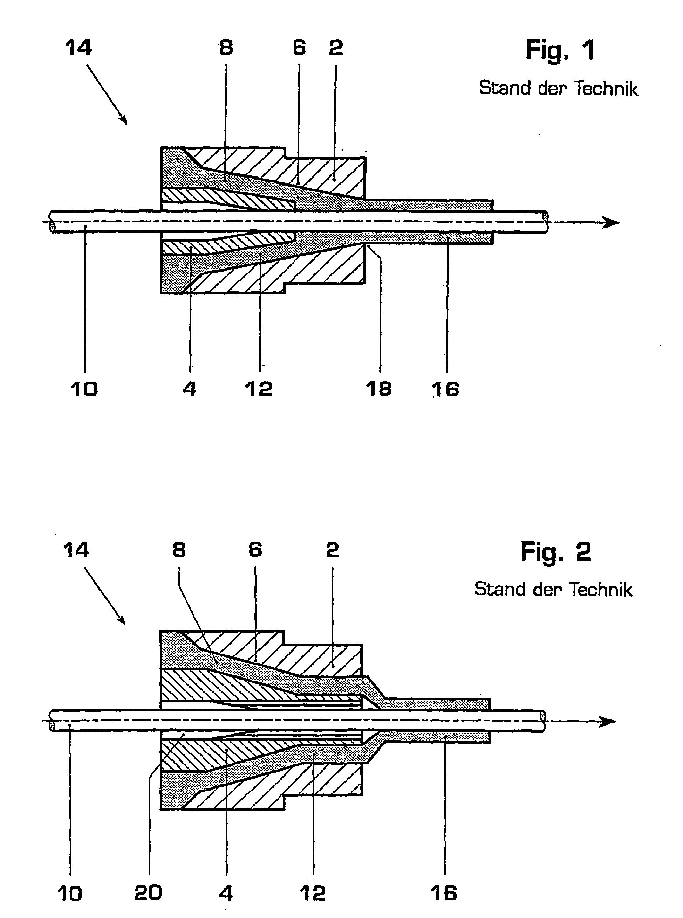

Aus der Kabeltechnik sind weitere Herstellungsmethoden zur Ummantelung von Leiterbahnen und Leiterbündeln bekannt. In den aus dem Stand der Technik bekannten Verfahren werden hierbei Leiterbündel mit runden Querschnitten in einem Extrusionsprozeß mit einem Thermoplast, vorzugsweise Polyethylen mit zum Teil anschließender Vemetzung, oder mit einem Elastomer, vorzugsweise Silikonelastomer oder Fluorelastomer, ummantelt. Hierzu kommen die Verfahren der Druckummantelung und der Schlauchummantelung zum Einsatz. Bei der Druckummantelung erfolgt das Ummanteln einer Leiterbahn unter Druck, d.h. der zunächst fließfähige Ummantelungswerkstoff wird unter Druck über geeignete Zuführungskanäle auf die Leiterbahn aufgebracht. Figur 1 zeigt in schematisierter Weise den Aufbau einer hierzu geeigneten Vorrichtung und den Vorgang der Druckummantelung einer Leiterbahn. Über eine Pinole, die vorzugsweise in Längsrichtung verschiebbar ist, kann die lichte Weite der Zuführkanäle verändert werden. Vorteil dieser Methode ist, daß die Schmelze auch in vorhandene Zwickel eindringt, was durch zusätzliches Vakuum unterstützt werden kann, so daß sich dieses Verfahren sehr gut für ein Aufbringen einer halbleitenden inneren Leiterglättungsschicht eignet. Auch die Haftfestigkeit des Polymers auf dem Substrat wird durch den Druck positiv beeinflußt. Bei dem in Figur 2 ebenso in schematisierter Weise dargestellten Schlauchummantelungsverfahren wird hingegen ein Schmelzeschlauch erzeugt, der dann am Werkzeugende mit einem Innenradius versehen austritt. Der Innenradius ist hierbei größer als der Außenradius des zu ummantelnden Leiters. Das Anlegen des Schlauches auf den Leiter wird dadurch erreicht, daß der Leiter mit größerer Geschwindigkeit von dem Werkzeugende abgezogen wird, als daß der Schmelzeschlauch aus dem Düsenkopf austritt. Durch ein Vakuum zwischen Schlauch und Leiter kann das Anlegen am Düsenkopfaustritt unterstützt werden. Hier kann in der Regel auch auf eine anschließende Kalibrierung der Dicke der Ummantelung, d.h. eine vorzugsweise mechanisierte Kontrolle der Dicke bei gleichzeitiger Glättung von Unebenheiten, verzichtet werden. Unmittelbar nach dem Austritt aus dem Düsenkopf geht der ummantelte Leiter in eine Kühlstrecke, in der die Ummantelung aushärtet. Im Falle der oben beschriebenen Druckummantelung erfolgt eine solche Kalibrierung vorteilhaft durch den Düsenaustrittsquerschnitt.

Die oben beschriebenen Verfahren sind jedoch nicht oder nur bedingt zur Ummantelung von Leiterbahnen beliebigen Querschnitts, wie beispielsweise rechteckigen Querschnitts, und/oder komplizierter Leiterbahnkonturen, wie beispielsweise geknickte oder gebogene Verläufe, geeignet.

In US 5 650 031 ist hierzu eine Vorrichtung und ein Verfahren beschrieben, mit dem eine Leiterbahn beliebigen Querschnitts und komplizierter Leiterbahnkontur mit einem Thermoplast ummantelt werden kann. Hierzu wird eine Düse mit einer sich verjüngenden Durchlaßöffnung verwendet, wobei die Leiterbahn durch die Durchlaßöffnung geführt wird. Die größere Öffnung am Eintritt in die Düse zusammen mit einer nur geringen Berührfläche am Austritt aus der Düse gewährleistet eine gewisse Winkelbeweglichkeit der in der Durchlaßöffnung geführten Leiterbahn. Alternativ kann hier entweder die Leiterbahn bei ortsfest angeordneter Düse fortbewegt werden oder die Düse längs der ortsfesten Leiterbahn verschoben werden.
Ein wesentlicher Nachteil des aus US 5 650 031 bekannten Verfahrens und auch der weiteren oben beschriebenen Verfahren zur Ummantelung von Leiterbahnen stellt die erforderliche kontinuierliche Betriebsweise dar, um einen gleichmäßigen Schmelzfilm des Ummantelungsmaterials und somit eine gleichmäßige Ummantelungsdicke zu erzielen. Der während des Anfahrprozesses ummantelte Leiterbahnanteil muß in der Regel aufgrund nicht tolerabler Ungleichmäßigkeiten der Ummantelung als Ausschuß abgeschnitten werden. Im Falle eines beliebigen Querschnitts der Leiterbahn, beispielsweise eines Rechteckprofils, bilden sich während des Anfahrprozesses besonders gravierende Ungleichmäßigkeiten der Ummantelung, insbesondere der Dicke der Ummantelung, aus.

### Darstellung der Erfindung

Der Erfindung liegt daher die Aufgabe zugrunde, eine Vorrichtung sowie ein Verfahren zur Verfügung zu stellen, mittels derer es möglich ist, Leiterbahnen mit beliebigen Querschnitten und beliebigen Konturverläufen mit einem Ummantelungswerkstoff, vorzugsweise einem Thermoplast oder einem Elastomer, zweckmäßig unter Vermeidung der aus dem Stand der Technik bekannten Nachteile zu beschichten oder vollständig mit diesem Ummantelungswerkstoff zu ummanteln. Die Ummantelung soll hierbei qualitativ hochwertig sein, d.h. sowohl eine gute Haftfähigkeit auf der Leiterbahn als auch eine weitgehend gleichmäßige Dicke aufweisen. Im Vergleich zum Stand der Technik soll der Vorgang der Beschichtung/Ummantelung insbesondere einer Vielzahl von Leiterbahnen, die der Ummantelungsvorrichtung zugeführt werden, vereinfacht erfolgen. Hierbei soll es insbesondere möglich sein, eine Vielzahl von einzelnen Leiterbahnen bei kontinuierlicher sowie auch diskontinuierlicher Zuführung qualitativ hochwertig zu ummanteln.

Diese Aufgabe wird erfindungsgemäß durch einen Extruderkopf, eine Extrusionsvorrichtung und ein Verfahren zur Ummantelung einer Leiterbahn gemäß den Patentansprüchen gelöst.

Im folgenden wird zumeist nur der Vorgang der Ummantelung eines Leiters oder einer Leiterbahn beschrieben. Gleichermaßen bezieht sich die Erfindung jedoch auch auf Vorrichtungen und Verfahren zur Beschichtung eines Leiters oder einer Leiterbahn in nur einem Abschnitt des Leiters oder der Leiterbahn. Abschnitt bezieht sich hierbei sowohl auf einen Abschnitt in Axialrichtung als auch auf einen Abschnitt in Umfangsrichtung.

Der erfindungsgemäße Extruderkopf zur Verwendung in einer Vorrichtung zur Ummantelung einer Leiterbahn weist zumindest eine Extruderdüse auf, die auf der Einlaßseite mit einer Zuleitung zur Zuführung des Ummantelungswerkstoffes verbunden ist oder verbindbar ist und auf der Auslaßseite in einen Bereich einmündet, an den im Betrieb die zu ummantelnde Leiterbahn angrenzt. Ferner ist der Auslaß der Extruderdüse mittels eines Verschlusses verschließbar. Somit ist es möglich, Ummantelungswerkstoff kontinuierlich zu fördern, die Extruderdüse jedoch nur bei Bedarf zu öffnen, so daß nur bei geöffneter Extruderdüse Ummantelungswerkstoff aus der Extruderdüse austritt. Sobald die Leiterbahn in dem zu beschichtenden Bereich mit Ummantelungswerkstoff beschichtet bzw. ummantelt ist, wird die Extruderdüse wieder verschlossen, so daß es zu keinem weiteren Austritt von Ummantelungswerkstoff aus der Extruderdüse mehr kommt. Bei weiterhin kontinuierlicher Förderung des Ummantelungswerkstoffes, die beispielsweise mit Hilfe einer Förderschnecke erfolgen kann, wird der Förderdruck des Ummantelungswerkstoffes in dem Bereich vor dem Verschluß weiterhin aufrechterhalten. Die Förderschnecke ist hierzu zweckmäßig mittels der Zuführleitung mit der Extruderdüse verbunden. Wird der Verschluß erneut geöffnet, so tritt erneut nach sehr kurzer Anlaufphase ein zeitlich konstanter Volumenstrom des Ummantelungswerkstoffes aus der Extruderdüse aus. Die Anlaufphase bis zum Aufbau eines konstanten Volumenstroms ist somit im Vergleich zum Stand der Technik erheblich verkürzt, so daß bereits nach sehr kurzer Anlaufzeit eine gleichmäßige Dicke der Ummantelung der Leiterbahn erzielt wird. Ausschuß fällt somit nicht mehr oder im Vergleich zu aus dem Stand der Technik bekannten Verfahren und Vorrichtungen zumindest in deutlich verringertem Ausmaß an.

In Zuführrichtung des Ummantelungswerkstoffes ist vor dem Verschluß vorteilhaft eine Bypass-Abzweigung angeordnet ist. Über diese Bypass-Abzweigung kann im Falle der geschlossenen Extruderdüse der kontinuierlich geförderte Ummantelungswerkstoff abfließen, ohne daß es zu einem übermäßigen Aufstau vor der Extruderdüse kommt. Dies ist insbesondere aus den Gründen vorteilhaft, da einerseits der Druck des Ummantelungswerkstoffes in der Zuführleitung auch bei geschlossener Extruderdüse auf konstantem Niveau gehalten wird und andererseits so auch ein mögliches Aushärten des Ummantelungswerkstoffes vor der geschlossenen Extruderdüse verhindert wird. Aufgrund des konstanten Druckniveaus kommt es auch im Falle des Öffnens des Verschlusses der Extruderdüse nicht zu einem, wenn auch nur kurzzeitigen, übermäßigen Ausfluß an Ummantelungswerkstoff. Vielmehr liegt unmittelbar nach dem Öffnen des Verschlusses bereits ein konstanter, sich auch im weiteren nicht verändemder Volumenstrom vor, so daß die Ausbildung einer von Anbeginn an gleichmäßigen Ummantelungsdicke der Leiterbahn möglich ist. Ferner wird durch die Bypass-Abzweigung verhindert, daß Ummantelungswerkstoff bei zu langer Verweildauer unmittelbar vor dem Verschluß aushärtet. Bei Thermoplasten könnte eine solche Aushärtung beispielsweise durch Abkühlung aufgrund des Wärmeaustauschs mit der Extruderdüse und/oder der Zuleitung auftreten. Bei einem Elastomer als Ummantelungswerkstoff könnte eine Vernetzungsreaktion bereits in der Zuleitung einsetzen und so zu einem zumindest teilweise Aushärten führen. Hierdurch würde die Zuführung in ihrem Querschnitt zumindest vermindert oder sogar ganz verstopft werden, was in jedem Fall im Weiteren einen ungleichmäßigen Zufluß und hierdurch letztlich eine ungleichmäßige Ummantelungsdicke verursachen würde. Durch die Bypass-Abzweigung wird jedoch verhindert, daß sich Ummantelungswerkstoff auch nach dem Schließen des Verschlusses vor dem Verschluß ansammelt und hier aushärtet. Vorteilhaft ist die Bypass-Abzweigung über eine Leitung mit einem Auffangbehälter verbunden ist, in den der abgezweigte Ummantelungswerkstoff abgeführt wird und von hier aus auch einem Recycling-Prozeß zugeführt werden kann.
Alternativ könnte ein Aushärten im Falle der Verwendung von Thermoplasten auch durch eine geeignete Heizung verhindert werden.

Vorteilhaft ist der Bereich, in den die Extruderdüse einmündet, als eine in dem Extruderkopf angeordnete Aussparung mit einem der Leiterbahn und unter Berücksichtigung des formabhängigen Extrusionsschrumpfes entsprechenden Querschnitt ausgeführt. Im Betrieb des Extruderkopfes bewegt sich die Leiterbahn relativ zu der Extruderdüse längs der Aussparung. Zwischen Aussparung und Leiterbahn verbleibt ein Zwischenraum, in den der Ummantelungswerkstoff eingebracht wird. Zur Führung der Leiterbahn in der Aussparung können in der Aussparung zusätzlich Führungsstifte oder andere Führungselemente angeordnet sein, die den Zwischenraum überbrücken. Da während des Aushärtens der meisten geeigneten Ummantelungswerkstoffe ein Schrumpfen auftritt, ist zweckmäßig der Zwischenraum zumindest um den formabhängigen Extrusionsschrumpf des Ummantelungswerkstoffes größer ausgeführt als die zu erzielende Ummantelungsdicke. Ferner mündet die Extruderdüse vorzugsweise im wesentlichen radial in die Aussparung ein. Hierdurch wird sichergestellt, daß sich der Ummantelungswerkstoff, der aus der Extruderdüse austritt und im wesentlichen frontal auf die Leiterbahn auftrifft, über den gesamten Freiraum verteilt. Die axiale Baulänge des Extruderkopfes kann infolgedessen minimiert werden.
Der so ausgeführte Extruderkopf ermöglicht eine Bearbeitung von Leiterbahnen unterschiedlichster Querschnitte, wie beispielsweise mit runden und ovalen bzw. elliptischen Querschnitten, aber insbesondere auch mit rechteckförmigen oder vieleckförmigen Querschnitten.

In einer besonders bevorzugten Ausführungsform verjüngt sich der Querschnitt des Bereiches, in den die Extruderdüse einmündet, in axialer Richtung der Leiterbahn von dem Leiterbahneintrittsquerschnitt zu dem Leitembahnaustrittsquerschnitt hin entsprechend dem in diesem Bereich auftretenden Extrusionsschrumpf. Hierdurch läßt sich sicherstellen, daß die Ummantelung der Leiterbahn im Bereich des Extruderkopfes trotz Extrusionsschrumpfes überall eine gleichmäßig formende Druckkraft erfährt. Dies unterstützt die gleichmäßige Ausbildung der Ummantelung.

Besonders zweckmäßig ist die Länge des Extruderkopfes in axialer Richtung der Leiterbahn kleiner als ein Zehntel, vorzugsweise kleiner als ein Zwanzigstel eines Radius der Leiterbahnkontur. Weist die Leiterbahnkontur mehrere Radien auf, so ist hier zweckmäßig der kleinste Radius als Referenzradius zu berücksichtigen. Dies ermöglicht, daß die Leiterbahn auch in gebogenen oder geknickten Bereichen längs der Aussparung geführt und mit Hilfe des Extruderkopfes ummantelt werden kann, wobei in den gebogenen oder geknickten Bereichen der Leiterbahn keine oder nur minimale Ungleichmäßigkeiten der Ummantelungsdicke entstehen. Zusammen mit einer sich zweckmäßig vom Eintrittsquerschnitt zum Austrittsquerschnitt hin verjüngenden Aussparung, wobei insbesondere der Bereich vor der Extruderdüse zweckmäßig einen größeren Verjüngungswinkel aufweist als der dem Schrumpfmaß entsprechend Winkel, kommt es nur längs eines Teilbereichs der Aussparung zu einem formschlüssigen Anliegen der Leiterbahn mitsamt der Ummantelung an die Begrenzungswände der Aussparung. Je kürzer dieser Teilbereich bei einem gleichzeitig hinreichend großen Verjüngungswinkel ist, desto toleranter ist der Extruderkopf hinsichtlich Fehlwinkel in der Ausrichtung der Leiterbahn relativ zur Mittelachse der Aussparung. Gebogene oder geknickte Leiterbahnabschnitte führen automatisch zu einem Fehlwinkel in der Ausrichtung.

Zweckmäßig sind am Umfang der Aussparung eine Vielzahl von Extruderdüsen so verteilt angeordnet, daß sich eine gleichmäßige Schichtdicke des Ummantelungswerkstoffes am Umfang der Leiterbahn ausbildet. Hierzu sind insbesondere in Bereichen von Ecken der Aussparung die Extruderdüsen in zueinander verkürzten Abständen anzuordnen.

In einigen Fällen ist es darüber hinaus vorteilhaft, den Ummantelungswerkstoff zusätzlich zu verdichten. Hierzu verjüngt sich zweckmäßig der Bereich, in den die Extruderdüsen einmünden, in axialer Richtung der Leiterbahn von dem Leiterbahneintrittquerschnitt zu dem Leiternbahnaustrittsquerschnitt hin stärker als dies alleine zur Anpassung an den Extrusionsschrumpf nötig wäre. Alternativ oder auch ergänzend können in diesem Bereich zu dem vorgenannten Zweck auch Staubalken und/oder Stauring-Segmente, die vorzugsweise justierbar sind, angeordnet sein.

Der Extruderkopf kann nach dem Prinzip der Druckummantelung oder auch nach dem Prinzip der Schlauchummantelung ausgelegt sein. Weitere Ausführungsmerkmale des Extruderkopfes, wie beispielsweise das Vorhandensein einer justierbaren oder auch feststehenden Pinole, Druckbeaufschlagung des zugeführten Ummantelungswerkstoffes oder auch Anlegen eines Vakuums sowie weitere Merkmale, sind dementsprechend auch in Anlehnung an den Stand der Technik ausführbar.

Auch ist es vorteilhaft möglich, jeweils zwei oder mehr Extruderdüsen in Axialrichtung in dem Extruderkopf hintereinander anzuordnen. Mittels zumindest zweier hintereinander angeordneter Düsen läßt sich mit einem Verfahrensgang auch eine dementsprechende Anzahl unterschiedlicher Ummantelungsschichten auf der Leiterbahn aufbringen. Der Werkstoff kann hierbei von Schicht zu Schicht variieren. Es kann jedoch auch für jede Schicht ein und derselbe Werkstoff verwendet werden. Geeignet ist eine solche Extrusion mehrerer Schichten auch, um unter Verwendung nur eines Basiswerkstoffes, beispielsweise eines Polymers, unterschiedliche Leitfähigkeiten in den einzelnen Schichten zu erzielen.

Als Ummantelungswerkstoffe werden zweckmäßig Elastomere oder Thermoplaste, die beide vorzugsweise mit einem Füllstoff versetzt werden, oder auch Duroplaste im B-Zustand verwendet. Als geeignetes Elastomer kommt vorzugsweise Ethylen-Propylen-Dien Monomer (EPDM) zum Einsatz. Im Falle thermisch hochbelasteter Maschinen wird vorzugsweise ein Silikonelastomer verwendet. Elastomere bieten den Vorteil der verhältnismäßig geringen Anforderungen bezüglich Prozeßtemperatur und Prozeßdruck bei der Verarbeitung. Silikonelastomere weisen darüber hinaus bereits inhärent eine nicht unbedeutende Resistenz gegenüber elektrischen Teilentladungen auf und altem zusätzlich in einem elektrischen Feld in einem nur geringen Maße. Als geeignete Thermoplaste kommen beispielsweise Polyethylen, Polypropylen, PET, sowie für thermisch hochbeanspruchte Maschinen insbesondere Hochtemperatur Thermoplaste wie beispielsweise Polyethylennaphthalat (PEN), Polyetherimid (PEI), Polyphenylensulfid (PPS), Polyethersulfon (PES), Polysulfon (PSU), Polyetherketon (PEK) und Polyetheretherketon (PEEK) in Frage.
Die Materialeigenschaften können zusätzlich zweckmäßig durch Zugabe von aktiven und passiven Füllstoffen, wie beispielsweise Pulver oder Fasern, so eingestellt werden, daß das Material den geforderten mechanischen und thermischen Anforderungen genügt. In einer besonders bevorzugten Ausführungsform der Erfindung werden die Füllstoffe, insbesondere bei Verwendung von Fasern oder Plättchen als Füllstoff, zusätzlich in einer Vorzugsrichtung ausgerichtet. Durch die Verwendung von Füllstoffen im Allgemeinen werden die mechanischen und thermischen Eigenschaften eines Basiswerkstoffes beeinflußt. So kann beispielsweise durch die Zugabe von Füllstoffen die thermische Ausdehnung von Thermoplasten an die eines Kupferleiters angenähert werden. Üblicherweise weisen Thermoplaste deutlich höhere thermische Ausdehnungskoeffizienten auf als Kupferleiter, wodurch es im Falle der thermischen Ausdehnung zu hohen mechanischen Spannungen kommt. Ebenso läßt sich über Füllstoffe auch die Viskosität eines Thermoplasts verändern. Die Ausrichtung der Füllstoffe, insbesondere bei Verwendung von fasrigen oder plättchenförmigen Füllstoffen in einer bevorzugten Richtung in der Ummantelung kann vorteilhaft einerseits zu einer Veränderung, in der Regel einer Erhöhung, der mechanischen Festigkeit, andererseits aber auch zu einer Verminderung der thermischen Ausdehnung in Leiterlängsrichtung sowie auch zu einer elektrischen Barrierenwirkung in Feldrichtung führen.

In einem weiteren Aspekt der Erfindung wird eine Extrusionsvorrichtung zur Ummantelung einer Leiterbahn zur Verfügung gestellt, die zumindest einen wie oben beschriebenen, erfindungsgemäßen Extruderkopf aufweist und darüber hinaus ein Förderelement zum Fördern des Ummantelungswerkstoffes. Als Förderelement kommt vorzugsweise eine Schraubenschnecke zum Einsatz, die auf der Eingangsseite Ummantelungswerkstoff zweckmäßig aus einem Vorratsbehälter ansaugt und ausgangsseitig zweckmäßig in eine mit dem Extruderkopf verbundene Leitung fördert. Von hier gelangt der Ummantelungswerkstoff zu der zumindest einen, mittels Verschluß verschließbaren Extruderdüse und tritt bei geöffnetem Verschluß letztlich in der oben beschriebenen Weise aus der Extruderdüse aus. Um das Öffnen und Schließen des Verschlusses der Extruderdüse positionssynchronisiert in Abhängigkeit der relativen Position der zu ummantelnden Leiterbahn vornehmen zu können, umfaßt die Extrusionsvorrichtung vorteilhaft ferner eine Regelungs- und Steuereinrichtung. Diese Regelungs- und Steuervorrichtung umfaßt neben Signalverarbeitungselementen und Signalleitungselementen auch Positionssensoren zum Erkennen der Position der Leiterbahn. Sobald die Leiterbahn in den Bereich der Extruderdüse eintritt, wird der Verschluß der Extruderdüse geöffnet und es gelangt Ummantelungswerkstoff durch die Extruderdüse auf die Leiterbahn. Ist das Ende der Leiterbahn erreicht, so erkennt die Regelungs- und Steuervorrichtung dies und steuert wiederum mittels eines Steuersignals das Verschließen des Verschlusses der Extruderdüse. Somit kann der Vorgang der Ummantelung einer Leiterbahn sowie auch einer Vielzahl von hintereinander angeordneten Leiterbahnen vollautomatisch ablaufen, ohne daß manuell Steuersignale generiert werden müssen. Gleichzeitig ist hierdurch sichergestellt, daß nur dann, wenn ein zu beschichtender bzw. zu ummanteinder Bereich einer Leiterbahn vor der Extruderdüse positioniert ist, Ummantelungswerkstoff aus der Extruderdüse austritt.

Die Extrusionsvorrichtung umfaßt ferner zweckmäßig eine Beförderungsvorrichtung, welche die Leiterbahn durch den Bereich, in den die zumindest eine Extruderdüse einmündet, transportiert. Hierbei handelt es sich bevorzugt um Klemmelemente und Rollenelemente, wobei letztere zumindest teilweise angetrieben werden.
Alternativ hierzu kann die Extrusionsvorrichtung aber auch eine Haltevorrichtung für die Leiterbahn und eine Beförderungsvorrichtung für den Extruderkopf umfassen, so daß der Extruderkopf längs der ruhenden Leiterbahn geführt werden kann. Je nachdem, ob die weiteren Elemente der Extrusionsvorrichtung fest mit dem Extruderkopf oder mittels einer flexiblen Leitung mit dem Extruderkopf verbunden sind, müssen hierbei auch eventuell Teile der Extrusionsvorrichtung zusammen mit dem Extruderkopf bewegt werden.
In beiden Fällen weisen der Antrieb und die Führung zweckmäßig eine Mehrachsenbeweglichkeit auf, um dreidimensional geformten Leiterbahnen folgen zu können. Auch ist es hier von Vorteil, wenn die Bewegung mittels einer vorzugsweise programmierbaren Steuerung oder mittels eines geschlossenen Regelkreises gesteuert wird.

In einer bevorzugten Ausführungsform der Extrusionsvorrichtung umfaßt diese ferner eine Vorrichtung zur Ausrichtung faserförmigen oder plättchenförmigen Füllstoffes, der dem Basiswerkstoff beigemischt wird. Im wesentlichen handelt es sich hierbei um eine Vorrichtung zur Erzeugung von Scherkräften in Richtung der beabsichtigten Ausrichtung. Dies kann beispielsweise durch lokale Verengungen in der Strömung des Ummantelungswerkstoffes vor oder nach dem Auftrag auf die Leiterbahn erzielt werden. Auch in diesem Bereich angeordnete Scherplatten erfüllen diesen Zweck.

Ferner können vorteilhaft ein oder mehrere Heizelemente zur Erwärmung der Leiterbahn auf eine Vorheiztemperatur angeordnet sein. Bei den Heizelementen kann es sich beispielsweise um eine induktive Heizung, eine Infrarotheizung oder auch eine Warmluftheizung handeln. Hierdurch soll verhindert werden, daß der auf die Oberfläche der Leiterbahn auftreffende Ummantelungswerkstoff sich lokal zu schnell abkühlt und hierdurch vorzeitig aushärtet, wodurch es auch zu einer ungenügenden Haftung zwischen der Leiterbahnoberfläche und dem Ummantelungswerkstoff kommen könnte. Hier ist es auch möglich, die Leiterbahn vorteilhaft mit einem Haftvermittler vorzubehandeln. Vorzugsweise sind die Vorheiztemperatur, die Werkzeugtemperatur (d.h. die Temperatur des Extruderkopfes und/oder der Extruderdüse) und die Temperatur des Ummantelungswerkstoffes mit Sensoren zu erfassen und mittels einer Heizungsregelung zu regeln.

In einer bevorzugten Ausführungsform der Extrusionsvorrichtung sind zumindest zwei Extruderköpfe axial, d.h. in Leiterlängsrichtung, hintereinander angeordnet. Mittels dieser zumindest zwei hintereinander angeordneten Extruderköpfe, wobei jeder Extruderkopf mindestens eine Extruderdüse aufweist, lassen sich somit entsprechend mehrere Schichten der Ummantelung in einem Verfahrensgang auf der Leiterbahn aufbringen.

Zweckmäßig weist darüber hinaus die Extrusionsvorrichtung eine am Austritt des Extruderkopfes angeordnete Kalibriervorrichtung, vorzugsweise zumindest eine Kalibrierrolle, auf. Hierdurch kann die Dicke der aufgebrachten Ummantelung überprüft und bei Ungleichmäßigkeiten in der Dickenverteilung der Ummantelung diese ausgeglichen werden. Vorteilhaft wirkt die Kalibrierrolle hierbei als Anpressrolle, die eine Anpresskraft auf die ummantelte Leiterbahn ausübt. Die Kalibrierrolle ist hierzu in einem solchen Abstand am Austritt des Extruderkopfes angeordnet, daß der Ummantelungswerkstoff noch nicht vollständig ausgehärtet ist.

Ein weiterer Aspekt der Erfindung betrifft ein Verfahren zur Ummantelung einer Leiterbahn. Das erfindungsgemäße Verfahren umfaßt hierbei die Schritte:
a) Kontinuierliches Fördern eines fließfähigen Ummantelungswerkstoffes aus einem Vorratsreservoir in ein Auffangreservoir;
b) Erzeugen einer Relativbewegung zwischen der Leiterbahn und einem Extruderkopf einer Extrusionsvorrichtung;
c) Führen der Leiterbahn längs des Extruderkopfes, wobei zwischen der Leiterbahn und dem Extruderkopf ein Zwischenraum verbleibt;
d) Einbringen zumindest eines Teils des kontinuierlich geförderten Ummantelungswerkstoffes in den Zwischenraum;
e) Beenden des Einbringens von Ummantelungswerkstoff in den Zwischenraum sobald das Ende des zu beschichtenden Bereichs der Leiterbahn erreicht ist.

In Verfahrensschritt d kann ferner vorteilhaft ein Kalibrieren der Dicke des Ummantelungswerkstoffes erfolgen.

Der in dem erfindungsgemäßen Verfahren verarbeitete Ummantelungswerkstoff kann hierbei ein mit einem fasrigen oder plättchenförmigen Füllstoff versetztes Elastomer oder Thermoplast sein. Zusätzlich kann im Verfahrensschritt d der Füllstoff vorteilhaft in Extrusionsrichtung ausgerichtet werden.

### Kurze Beschreibung der Zeichnungen

In den Zeichnungen sind Ausführungsbeispiele der Erfindung dargestellt. Es zeigen:
- Fig. 1: in schematisierter Darstellung eine aus dem Stand der Technik bekannte Vorrichtung zur Druckummantelung eines Leiters;
- Fig. 2: in schematisierter Darstellung eine aus dem Stand der Technik bekannte Vorrichtung zur Schlauchummantelung eines Leiters;
- Fig. 3: in Schnittdarstellung eine erfindungsgemäße Extrusionsvorrichtung mit einem erfindungsgemäßen Extruderkopf;
- Fig. 4: einen Schnitt durch einen Extruderkopf mit einer rechteckförmigen Aussparung zur Ummantelung rechteckförmiger Leiterbahnen;
- Fig. 5: einen Längsschnitt durch eine gebogene Leiterbahn und einen erfindungsgemäßen Extruderkopf;
- Fig. 6: in geschnittener Darstellung eine weitere Ausführungsform eines erfindungsgemäßen Extruderkopfes, der nach dem Prinzip der Druckummantelung arbeitet;
- Fig. 7a: in geschnittener Darstellung eine weitere Ausführungsform eines erfindungsgemäßen Extruderkopfes, der nach dem Prinzip der Schlauchummantelung arbeitet;
- Fig. 7b: eine Detaildarstellung des Extruderkopfes aus Figur 7a;
- Fig. 8: eine Vorrichtung zur Ausrichtung eines dem Ummantelungsbasiswerkstoff zugemischten Füllstoffes;
- Fig. 9: mehrere durch eine Extrusionsvorrichtung laufende Leiterstäbe;
- Fig. 10: einen weiteren erfindungsgemäßen Extruderkopf mit jeweils zwei hintereinander angeordneten Extruderdüsen und einer am Austritt des Extruderkopfes angeordneten Kalibriervorrichtung.

Gleiche oder gleichwirkende Bauteile sind in der folgenden Beschreibung weitgehend mit gleichen Bezugszeichen versehen.

### Wege zur Ausführung der Erfindung

Die Figuren 1 und 2 geben aus dem Stand der Technik bekannte Vorrichtungen zur Ummantelung von Leitern oder Kabeln mit runden Querschnitten wieder. Die in Figur 1 dargestellte Vorrichtung arbeitet hierbei nach dem Prinzip der Druckummantelung, die in Figur 2 dargestellte Vorrichtung nach dem Prinzip der Schlauchummantelung. Beide Vorrichtungen bestehen im wesentlichen aus einem äußeren Extruderkopfgehäuse 2, das mittig eine sich verjüngende Bohrung 6 aufweist, und einer in dieser Bohrung angeordneten Pinole 4. Zwischen dem äußeren Extruder kopfgehäuse 2 und der Pinole 4 verbleibt ein kegelförmiger Zwischenraum 8, durch den der Ummantelungswerkstoff zugeführt werden kann. Die Pinole 4 kann hierbei in axialer Richtung verstellbar sein, so daß über eine axiale Verstellung der Pinole 4 die lichte Weite des Zwischenraumes 8 veränderbar ist. Die Pinole 4 selbst ist ebenso wiederum hohl ausgeführt, so daß im Betrieb mittig durch die Gesamtanordnung der zu ummantelnde Leiter 10 oder das zu ummantelnde Kabel 10 geführt werden kann.
Damit der zunächst fließfähige Ummantelungswerkstoff 12 aus einem in Figur 1 nicht dargestellten Vorratsbehälter in eine ebenso nicht dargestellte Verbindungsleitung und letztlich durch den Zwischenraum 8 zwischen dem Extruderkopfgehäuse 2 und der Pinole 4 auf den Leiter 10 fließt, wird der Ummantelungswerkstoff 12 entweder in dem Vorratsbehälter oder mittels einer in die Zuleitung integrierten Fördereinheit mit Druck beaufschlagt. Dies führt dazu, daß der Ummantelungswerkstoff 12 durch den Zwischenraum 8 auf den zu ummantelnden Leiter 10 ausfließt und diesen in der dargestellten Weise ummantelt. Vorzugsweise nach dem Austritt aus dem Extruderkopf 14 kommt es zu einem Aushärten des Ummantelungswerkstoffes, d.h. zu einem Verlust der Fließfähigkeit. Die Dicke der Ummantelung 16 ergibt sich in der in Figur 1 dargestellten Ausführung entsprechend dem Austrittsquerschnitt 18 aus dem Extruderkopf 14. Eine geringere Dicke der Ummantelung ließe sich hier nur durch Verringerung des Austrittsquerschnittes 18 erzielen. Ein Vorteil der Druckummantelung ist, daß der flüssige Ummantelungswerkstoff insbesondere auch in vorhandene Zwickel eindringt. Dieses Eindringen von Ummantelungswerkstoff in vorhandene Zwickel kann auch durch ein Anlegen von Vakuum im Bereich der Zuführung des Leiters unterstützt werden.

Die in Figur 2 dargestellte Vorrichtung arbeitet hingegen nach dem Prinzip der Schlauchummantelung. Hierbei wird zwischen Extruderkopfgehäuse 2 und Pinole 4 ein Schlauch 12 aus zumindest teilweise ausgehärtetem Ummantelungswerkstoff gebildet, der dann am Ende des Extruderkopfes 14 mit einem im Vergleich zu dem Durchmesser des zu ummantelnden Leiters 10 größeren Durchmesser aus dem Extruderkopf austritt. Das Anlegen des Schlauches 12 auf den Leiter 10 wird dadurch erzielt, daß der Leiter 10 mit einer größeren Geschwindigkeit aus dem Extruderkopf 14 austritt als der Schlauch 12, so daß es hier zu einem Strecken des Schlauches 12 kommt. Das Anlegen des Schlauches 12 auf den Leiter 10 kann hierbei durch Vakuum, das im rückwärtigen Bereich 20 angelegt wird, unterstützt werden.
Beide aus dem Stand der Technik bekannten Verfahren weisen die oben beschriebenen Nachteile auf. Insbesondere sind beide Verfahren in der dargestellten Weise nur einsetzbar für die Ummantelung von runden oder leicht ovalen Leitern, die einen geraden Konturverlauf, d.h. ohne Biegeradien und/oder Knicke, aufweisen. Des Weiteren müssen beide Verfahren über einen gewissen Anfahrzeitraum hinweg angefahren werden, bis daß sich ein stationärer Zustand des Ummantelungsprozesses einstellt. Innerhalb dieses Anfahrzeitraums kommt es zu erheblichen Qualitätsschwankungen der Ummantelung des Leiters in Form von Ungleichmäßigkeiten insbesondere der Dicke der Ummantelung, so daß der in diesem Anfahrzeitraum beschichtete Leiteranteil als Ausschuß weggeworfen werden muß.

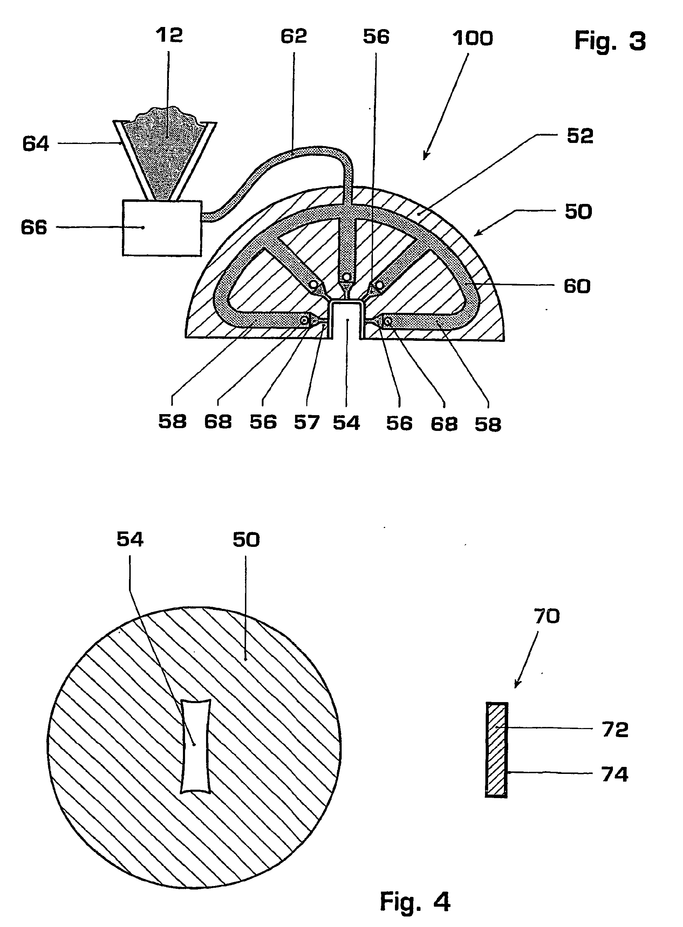

Mittels des in Figur 3 dargestellten, erfindungsgemäß ausgeführten Extruderkopfes 50 einer Extrusionsvorrichtung 100 können die aus dem Stand der Technik bekannten Nachteile vermieden werden. Der Extruderkopf 50 ist in Figur 3 in einem Schnitt dargestellt und umfaßt hier zunächst einen halbkreisförmigen Grundkörper 52. In dem Grundkörper 52 angeordnet befindet sich eine hier rechteckförmige Aussparung 54, an deren Umfang verteilt in der hier dargestellten Ausführungsform der Erfindung fünf Extruderdüsen 56 angeordnet sind. Die Extruderdüsen 56 sind hier jeweils mittels eines schnell verschließenden Verschlusses 57 verschließbar. Der Verschluß 57 ist hierzu vorteilhaft jeweils möglichst nahe der Einmündung der Extruderdüse 56 in die Aussparung 54 angeordnet. Als Schnellverschluß geeignet sind hier beispielsweise schnell wirkende Klappenverschlüsse oder Schieberverschlüsse oder auch anderweitige Verschlüsse. Die Extruderdüsen 56 sind jeweils auf der der Aussparung 54 abgewandten Seite mit Zuführleitungen 58 verbunden, die wiederum mit einer halbkreisförmig in dem Grundkörper 52 angeordneten, gemeinsamen Zuführleitung 60 verbunden sind. Die Zuführleitung 60 ist wiederum mittels einer flexiblen Leitung 62 mit einem Vorratsbehälter 64 verbunden. Am Ausfluß aus dem Vorratsbehälter 64 ist ein in Figur 3 schematisch dargestelltes Schneckenförderelement 66 angeordnet, welches dafür sorgt, daß kontinuierlich Ummantelungswerkstoff 12 aus dem Vorratsbehälter 64 in die flexible Leitung 62 gefördert wird. Der aus dem Vorratsbehälter 64 geförderte, fließfähige Ummantelungswerkstoff 12 strömt über die flexible Leitung 62 in die Ringleitung 60 und von hier über die radial angeordneten, einzelnen Zuführleitungen 58 in die Extruderdüsen 56. Ist die jeweilige Extruderdüse 56 geöffnet, so fließt der Ummantelungswerkstoff 12 in die Aussparung 54. In Strömungsrichtung vor dem jeweiligen Verschluß angeordnet, zweigen in der hier dargestellten Ausführungsform jeweils Bypass-Kanäle 68 von den Zuführleitungen 58 oder den Extruderdüsen 56 ab. Wenn die betreffende Extruderdüse 56 verschlossen ist, kann der geförderte Ummantelungswerkstoff 12 über diese Bypass-Kanäle 68 abfließen. Vorteilhaft münden die Bypass-Kanäle 68 entweder wieder unmittelbar in den Vorratsbehälter 64 oder in einen nicht dargestellten Auffangbehälter, von wo aus der nicht verbrauchte Ummantelungswerkstoff 12 recycelt werden kann.

Die hier dargestellte Ausführungsform der Erfindung ermöglicht aufgrund der rechteckförmig ausgeführten Aussparung 54 das Aufbringen einer gleichförmigen Beschichtungsdicke am Umfang eines Leiters oder einer Leiterbahn mit rechteckförmigem Querschnitt. Der Querschnitt der Aussparung 54 ist hierzu größer ausgeführt als der Querschnitt des zu beschichtenden Leiter oder der Leiterbahn bzw. des Leiterabschnittes oder des Leiterbahnabschnittes, so daß der Leiter bzw. die Leiterbahn in der Aussparung 54 zumindest teilweise aufgenommen werden kann. Der zwischen Leiter bzw. Leiterbahn und Aussparung verbleibende Freiraum kann sodann mit Ummantelungswerkstoff aufgefüllt werden, der über die Extruderdüsen 56 zugeführt wird. Der Leiter bzw. die Leiterbahn bewegt sich hierbei zweckmäßig mit gleichmäßiger Geschwindigkeit senkrecht zur Darstellungsebene, wobei er den in den Freiraum eingebrachten Ummantelungswerkstoff jeweils mittransportiert. Dem jeweiligen Werkstoff entsprechend härtet der Ummantelungswerkstoff hierbei aus.

Um den rechteckförmigen Freiraum überall gleichmäßig mit Ummantelungswerkstoff zu befüllen, sind in der hier dargestellten Anordnung jeweils in den beiden Ecken der Aussparung 54 Extruderdüsen 56 angeordnet. Die übrigen Extruderdüsen 56 sind näherungsweise am Umfang der Aussparung 54 gleichverteilt angeordnet, so daß es zu keiner lokalen Anhäufung von zugeführtem Ummantelungswerkstoff und andemorts zu einer möglichen Unterversorgung kommt.

Die hier dargestellte Ausführungsform des Extruderkopfes kann überdies besonders vorteilhaft in einer Anordnung von zwei in dieser Weise ausgeführten Extruderköpfen, die zu einem Vollkreis zusammengefügt sind, verwendet werden, so daß dementsprechend auch die zwei zusammengesetzten Aussparungen 54 ein geschlossenes Rechteck bilden. Ein hierin geführter Leiter bzw. eine hierin geführte Leiterbahn kann somit in einem Verfahrensgang über seinen/ihren gesamten Umfang beschichtet werden.
Grundsätzlich ist es sowohl möglich, daß der Extruderkopf längs der Kontur des Leiters oder der Leiterbahn geführt wird oder auch daß der Leiter bzw. die Leiterbahn bei ruhendem Extruderkopf durch die Aussparung transportiert werden. In beiden Fällen sind zusätzlich zu den in Figur 3 dargestellten Elementen insbesondere weitere Halteelemente sowie Antriebselemente erforderlich, die jedoch im Stand der Technik hinreichend bekannt sind.

Figur 4 zeigt eine vorteilhafte Ausgestaltungsform eines erfindungsgemäßen Extruderkopfes 50. Die Aussparung 54 ist hier mit einer geschlossenen, rechteckförmigen Kontur ausgeführt. Die Seitenwände der Aussparung 54 verlaufen jedoch nicht exakt gerade, sondern weisen einen konkaven Verlauf auf. Dieser konkave Verlauf der Seitenwände dient dazu, den beim Aushärten des Ummantelungswerkstoffes auftretenden Extrusionsschrumpf zu berücksichtigen. Nach dem Aushärten des Ummantelungswerkstoffes ergibt sich somit eine am Umfang des Leiters oder der Leiterbahn überall gleich dicke Ummantelungsschicht. Im rechten Teil der Figur 4 ist das beabsichtigte Zielprofil 70, d.h. im Querschnitt ein rechteckförmiger Leiter 72 mit einer mittels des Extruderkopfes 50 aufgebrachten Ummantelung 74, dargestellt. Die Konkavität der Seitenflächen der Aussparung 54 ergibt sich in Abhängigkeit des werkstofftypischen Extrusionsschrumpfes und somit in Abhängigkeit des verwendeten Ummantelungswerkstoffes aufgrund der in den Ecken geometriebedingten Anhäufung von Ummantelungsmaterial, so daß sich hier ein größerer Extrusionsschrumpf einstellt.

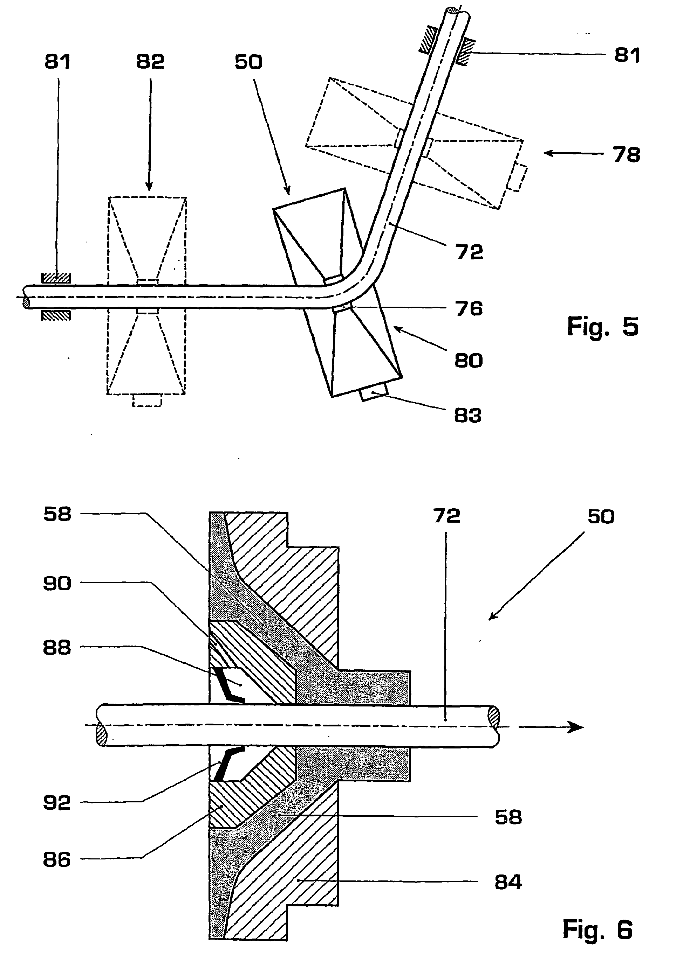

Um auch Leiter und Leiterbahnen mit gebogenem oder geknicktem Konturverlauf beschichten zu können, ist der Extruderkopf in dem Bereich, in dem er mit dem Leiter bzw. der Leiterbahn in Berührung kommt, in seiner Bauraumdicke in Längsrichtung des Leiters bzw. der Leiterbahn möglichst klein auszuführen. In Figur 5 ist ein solcher erfindungsgemäßer Extruderkopf 50 dargestellt. Die Kontaktfläche 76 zwischen dem Extruderkopf 50 und dem Leiter 72 beträgt hier etwa ein Zehntel des dargestellten Radius des Leiters 72. Es ist erkennbar, daß der Extruderkopf 50 längs des Leiters 72 aus einer ersten, gestrichelt dargestellten Position 78 über die zweite, ausgezogen dargestellte Position 80 in eine dritte, wiederum gestrichelt dargestellte Position 82 überführt werden kann und somit auch der gebogenen Kontur des Leiters 72 folgen kann. Trotz der gebogenen Kontur wird hier längs des Leiters überall eine gleichmäßige Schichtdicke der Ummantelung erzielt. Dazu ist am Leiter 72 eine Haltevorrichtung 81 und am Extruderkopf 50 eine Beförderungsvorrichtung 83 angeordnet, so daß der Extruderkopf 50 längs des ruhenden Leiters 72 geführt werden kann.
Vorteilhaft weist die Kontaktfläche des Extruderkopfes zu dem Leiter bzw. der Leiterbahn zusätzlich eine Querschnittsverengung vom Eintrittsquerschnitt zum Austrittsquerschnitt hin auf, um so einen zusätzlichen Druck auf die sich bildende Ummantelungsschicht auszuüben. Insbesondere wird hierdurch einer Schrumpfung infolge Abkühlung durch den Kontakt des Ummantelungswerkstoffes mit dem Leiter ausgeglichen.

Der erfindungsgemäße Extruderkopf kann grundsätzlich nach allen bekannten Arbeitsprinzipien betrieben werden, also insbesondere sowohl nach dem bereits oben beschriebenen Druckummantelungsverfahren als auch nach dem ebenfalls bereits oben beschriebenen Schlauchummantelungsverfahren.

In Figur 6 ist eine Ausführungsform des erfindungsgemäßen Extruderkopfe 50 dargestellt, die nach dem Druckummantelungsprinzip arbeitet. Der Extruderkopf 50 umfaßt ein mit einer Innenbohrung versehenes Extruderkopfgehäuse 84 und eine in der Innenbohrung angeordnete entweder fest justierte und somit axial nicht verstellbare oder auch axial verstell- und justierbare Pinole 86. Die Leiterbahn 72 sowie der Bohrungsquerschnitt der Pinole 86 als auch der Austrittsquerschnitt des Extruderkopfgehäuses 84 weisen hier einen, wie in den Figuren 3 und 4 dargestellt, rechteckförmigen Querschnitt auf. Um ein Rückströmen des Ummantelungswerkstoffes längs der Bohrung der Pinole 86 zu verhindem, wird auch der vordere Bohrungsbereich 88 der Pinole 86 mit Überdruck beaufschlagt. Der vordere Bohrungsbereich 88 der Pinole 86 ist hierbei über eine oder mehrere Zuführungen 90 mit einem Überdruckreservoir verbunden und mittels einer Dichtlippe 92 gegenüber der Umgebung abgedichtet. Ein Rückströmen von Ummantelungswerkstoff in den vorderen Bohrungsbereich 88 der Pinole 86 könnte beispielsweise bei zu großen Spaltmaßen zwischen Bohrung und Leiterbahn auftreten.
Um eine kleine axiale Baulänge des Extruderkopfes 50 realisieren zu können, verlaufen die Zuführkanäle 58 zwischen Extruderkopfgehäuse 84 und Pinole 86 im wesentlichen radial, d.h. der Winkel zwischen der Leiterbahnlängsachse und dem Zuführkanal beträgt bevorzugt mehr als 45° und weniger als 90°, besonders bevorzugt mehr als 70°. Die Zuführkanäle 58 können mit beliebigem Querschnitt ausgeführt sein. Bevorzugt sind die Zuführkanäle 58 mit einem runden oder elliptischen Querschnitt ausgeführt.

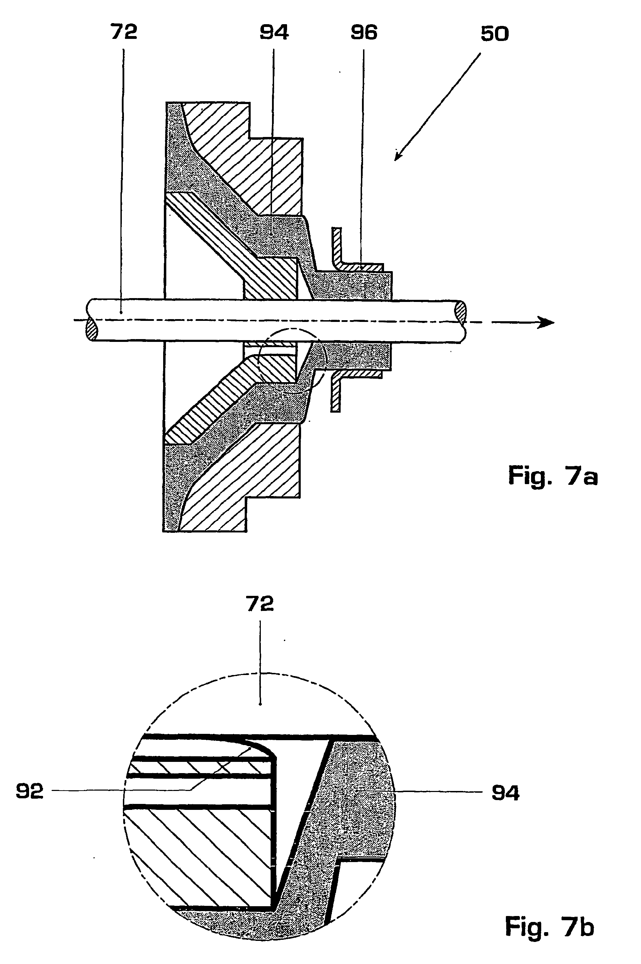

Die in Figur 7a dargestellte, weitere Ausführungsform des erfindungsgemäßen Extruderkopfes 50 arbeitet nach dem Prinzip der Schlauchummantelung. Die Leiterbahn 72 wird schneller weitertransportiert als der Ummantelungsschlauch 94 der Leiterbahn 72 zugeführt wird, wodurch es zu einer Streckung des Schlauches 94 kommt. Aufgrund dieser Streckung wiederum kommt es zu einem formgenauen Anlegen des Ummantelungsschlauches 94 an die Leiterbahn 72. Ein formgenaues Anlegen kann sich zudem auch unter Ausnutzung des Extrusionsschrumpfes des Schlauchwerkstoffes, d.h. dem Schrumpfvorgang infolge Abkühlung, ergeben. Der Ummantelungsschlauch 94 besteht aus Ummantelungswerkstoff, der bereits zumindest soweit ausgehärtet ist, daß er nicht infolge der wirkenden Zugkraft reißt. Andererseits darf der Werkstoff aber noch nicht soweit ausgehärtet sein, daß er sich nicht mehr verformen ließe.
Das Anlegen des Schlauches 94 kann auch durch ein Vakuum, das über eine oder mehrere Zuführungen zwischen dem Schlauch 94 und der Leiterbahn 72 aufgebracht wird, unterstützt werden. Der Bereich zwischen dem Schlauch 94 und der Leiterbahn 72 ist im Falle des zweckmäßigen Aufbringens von Vakuum mittels geeigneten Dichtlippen 92, wie beispielsweise in Figur 7b dargestellt, abzudichten. Der Austrittsquerschnitt der in Figur 7a dargestellten Ausführungsform ist wiederum rechteckförmig. Um eine sehr hohe Gleichmäßigkeit der Außenkontur zu erzielen, ist hier zusätzlich hinter dem Extruderkopf eine Kalibrier- und Anpreßvorrichtung 96 in Form eines entsprechenden Profils angeordnet, welches eine formende Kraft auf die Ummantelung ausübt und so Ungleichmäßigkeiten in der noch nicht vollständig ausgehärteten Ummantelung beseitigt.
Als zur Verarbeitung mit dem erfindungsgemäßen Extruderkopf und der erfindungsgemäßen Extrusionsvorrichtung geeignete Werkstoffe für die Ummantelung kommen bevorzugt Thermoplaste, besonders bevorzugt Elastomere in Frage. Als Thermoplaste kommen hierbei beispielsweise Polyethylen (PE), Polypropylen (PP), Polyethylenterephtalat (PET) oder auch Hochtemperatur-Thermoplaste wie beispielsweise PEN, PEI, Polyphenylensulfid (PPS), PES, PSU, Polyetherketon (PEK) und PEEK in Frage. Als Elastomere kommen beispielsweise EPDM sowie für thermisch hochbeanspruchte Maschinen vorzugsweise Silikonelastomere in Frage.
Um die Materialeigenschaften in einer gewünschten Weise darüber hinaus positiv zu beeinflussen, beispielsweise um die Festigkeit des Werkstoffs zu erhöhen oder den thermischen Ausdehnungskoeffizienten des Ummantelungswerkstoffes an den thermischen Ausdehnungskoeffizienten des Leiters oder der Leiterbahn anzupassen, können den Thermoplasten und auch den Elastomeren pulvrige oder fasrige, sowohl aktive als auch passive Füllstoffe beigemischt werden. Insbesondere bei Verwendung von fasrigen oder plättchenförmigen Füllstoffen sind die Fasern oder Plättchen hierbei zunächst in alle Richtungen verteilt ausgerichtet, ohne eine bevorzugte Ausrichtung aufzuweisen. Es ist in manchen Fällen wünschenswert, die Fasern oder Plättchen in einer bevorzugten Richtung auszurichten, um so einen bestimmten Effekt zu erzielen oder zu optimieren. So läßt sich beispielsweise durch Ausrichtung der Fasern oder Plättchen in Leiterlängsrichtung der Ausdehnungskoeffizient des Ummantelungswerkstoffes in dieser Richtung maximal verkleinem. Zudem entsteht hierbei eine elektrische Barrierenwirkung in Feldrichtung.

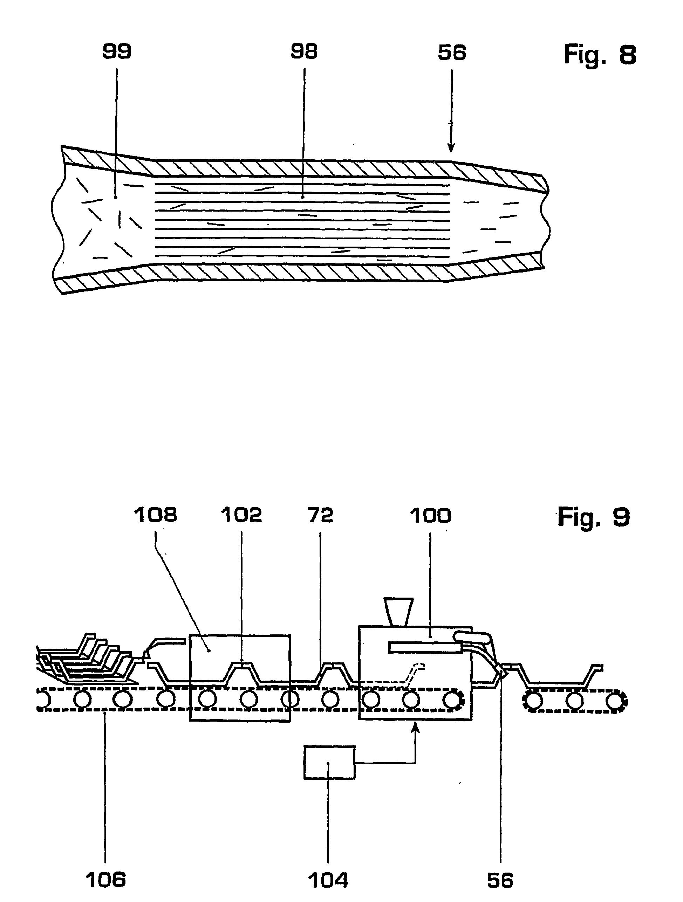

In Figur 8 ist eine Vorrichtung zur Ausrichtung eines dem Ummantelungsbasiswerkstoff zugemischten Füllstoffes dargestellt. Hierzu sind vor oder in der Extruderdüse 56 Scherkanäle 98 angeordnet, die zu Scherkräften in dem Extrusionsmaterial, d.h. dem Gemisch aus Ummantelungsbasiswerkstoff und dem Füllmaterial, führen. Die Scherkanäle 98 unterteilen hierbei den Zuleitungskanal vor der Extruderdüse oder die Extruderdüse in einzelne dünne Schichten, so daß es beim Durchströmen des Extrusionsmaterials durch diese Scherkanäle zu einer Ausrichtung des faserförmigen oder plättchenförmigen Füllstoffes in Richtung der Scherkanäle kommt. Bei dünnen Zuleitungskanälen oder Extruderdüsen ist ein zusätzlicher Einbau von Scherkanälen oftmals nicht erforderlich, da die hier auftretende Wandreibung zu einer ausreichenden Ausrichtung des Füllstoffes führt.

Figur 9 zeigt eine Extrusionsvorrichtung 100 für Leiter oder Leiterbahnen mit gebogenem oder geknicktem Konturverlauf, welche durch entsprechende Auslegung in der Lage ist, auch dreidimensional gebogene Leiterstäbe mit einem Ummantelungswerkstoff zu beschichten. Dazu werden mehrere Leiter 72 mittels provisorischer Verbindungen 102, z.B. durch Löten, Schweißen, Kleben etc., zu einem quasi-unendlichen Leiter 72 miteinander verbunden und in dieser Form durch die Extruderdüse 56 fortlaufend beschichtet. Die Extrusionsvorrichtung 100 besitzt eine Regelungs- und Steuereinrichtung 104, welche in Abhängigkeit der relativen Position des zu ummantelnden Leiters 72 zu der Extruderdüse 56 ein Öffnen oder Schließen des Verschlusses der Extruderdüse 56 steuert. Ferner umfasst die Extrusionsvorrichtung 100 eine Beförderungsvorrichtung 106, welche die Leiter 72 durch den Bereich, in den die Extruderdüse 56 einmündet, transportiert. Schliesslich weist die Extrusionsvorrichtung 100 ein Heizelement 108 auf, welches die Leiter 72 auf eine Vorheiztemperatur erwärmt. Natürlich können auch mehrere Heizelemente angeordnet werden. Nicht dargestellt ist das abschliessende Trennen der provisorischen Verbindung des quasi-unendlichen Leiters 72 in die mit der Ummantelung versehenen einzelnen Leiter 72.

In manchen Anwendungsfällen ist es zweckmäßig, in einem Verfahrensgang mehrere Ummantelungsschichten aufzubringen. Hierdurch können beispielsweise eine oder mehrere isolierende, halbleitende oder leitende Schichten auf dem Leiter oder der Leiterbahn aufgebracht werden. Grundsätzlich ist es hierzu möglich, mehrere erfindungsgemäße Extruderköpfe hintereinander anzuordnen. Bei gebogenen oder geknickten Leitern oder Leiterbahnen ist es hierzu zweckmäßig, den Leiter bzw. die Leiterbahn zu fixieren und die Extruderköpfe jeweils einzeln längs des Leiters bzw. der Leiterbahn zu bewegen, so wie dies für einen einzigen Extruderkopf bereits in Figur 5 schematisch dargestellt ist. Dabei ist zusätzlich auf die Temperatur zumindest der jeweils obersten Schicht zu achten, so daß je nach Ummantelungswerkstoff ein gutes Verschmelzen bzw. Anvemetzen des jeweils neuen Ummantelungsschlauches mit dem darunterliegenden erfolgt.

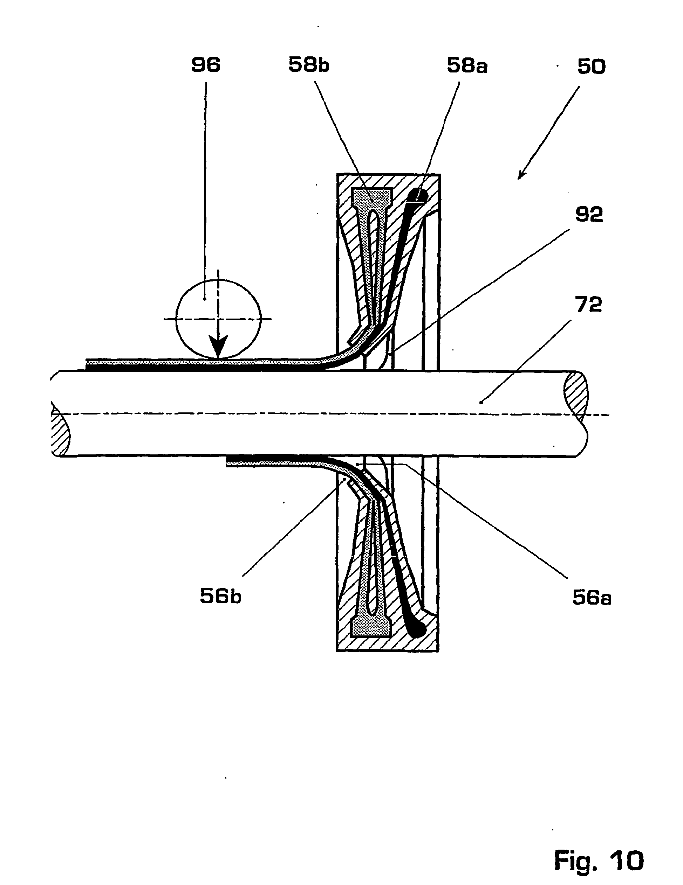

In einer besonders zweckmäßigen Ausführungsform der Erfindung jedoch kann eine solche Co-Extrusion mehrerer Schichten auch mit nur einem Extruderkopf durchgeführt werden. Der Extruderkopf 50 muß hierzu, wie in Figur 10 dargestellt, eine der aufzubringenden Anzahl an Schichten entsprechende Anzahl von in axialer Richtung hintereinander angeordneten Zuleitungen 58a, 58b und Extruderdüsen 56a, 56b aufweisen. Zusätzlich zu der Anordnung mehrerer Extruderdüsen in axialer Richtung ist hier zusätzlich zweckmäßig eine Vielzahl von Düsen in der oben beschriebenen Weise am Umfang gleichverteilt angeordnet. Die Geometrie der hintereinander angeordneten Zuleitungen und Extruderdüsen, insbesondere die lichten Weiten, werden vorteilhaft entsprechend dem jeweiligen Werkstoff angepaßt. In Figur 10 ist die Co-Extrusion eines unmittelbar auf dem Leiter aufgebrachten Innenglimmschutzes und einer äußeren Hauptisolation dargestellt. Der Leiter 72 wird in Figur 10 von rechts nach links transportiert. Eine Dichtlippe 92 sorgt hier zusätzlich für eine Abdichtung des Bereiches, in dem die Ummantelung aufgebracht wird, so daß dieser Bereich auch evakuiert werden kann, um so das Anlegen der Ummantelung zu unterstützen. In einem gewissen Abstand hinter dem Bereich, in dem die Ummantelung auf den Leiter aufgebracht wird, jedoch nicht so weit, daß der Ummantelungswerkstoff vollständig ausgehärtet ist, ist in der Ausführung gemäß Figur 10 zusätzlich eine als Andrückrolle ausgebildete Kalibrier- und Anpreßvorrichtung 96 angeordnet, die als Kalibrierrolle eine Kalibrierung, d.h. einen Ausgleich kleiner Unebenheiten, der frischen Ummantelungsschicht bewirkt. Zweckmäßig sind am Umfang des Leiters mehrere solcher Kalibrierrollen angeordnet, so daß eine Kalibrierung der Ummantelung am gesamten Umfang erfolgen kann. Zweckmäßig sollen diese Kalibrierrollen hierbei der Originalleitergeometrie folgen und somit kurzwellige Unebenheiten ausgleichen. Dies kann mittels eines Teach-In der Leitergeometrie vor der Ummantelung oder mittels eines Systems berührungsloser Online-Abstands- bzw. Dickenmeßsensoren erfolgen. Je nach Anforderung können die Kalibrierrollen hierbei auch kühlbar oder heizbar ausgeführt sein, wobei das Material der Kalibrierrollen thermisch stabil sein muß. Ferner darf das Material der Kalibrierrollen eine nur geringe Abrasionsneigung aufweisen und an der Schmelze auch nicht kleben.

### Bezugszeichenliste

- 2: Extruderkopfgehäuse
- 4: Pinole
- 6: Bohrung
- 8: Zwischenraum
- 10: Leiter
- 12: fließfähiger Ummantelungswerkstoff / Schlauch aus Ummantelungswerkstoff
- 14: Extruderkopf
- 16: Ummantelung
- 18: Austrittsquerschnitt
- 20: rückwärtiger Bereich
- 50: erfindungsgemäßer Extruderkopf
- 52: Grundkörper
- 54: Aussparung
- 56, 56a, 56b: Extruderdüse
- 57: Verschluß
- 58, 58a, 58b: Zuführleitung
- 60: Zuführleitung
- 62: flexible Leitung
- 64: Vorratsbehälter
- 66: Schneckenförderelement
- 68: Bypass-Kanal
- 70: Zielprofil
- 72: Leiter / Leiterbahn
- 74: Ummantelung
- 76: Kontaktfläche
- 78: erste Position
- 80: zweite Position
- 81: Haltevorrichtung
- 82: dritte Position
- 83: Beförderungsvorrichtung
- 84: Extruderkopfgehäuse
- 86: Pinole
- 88: vorderer Bereich
- 90: Zuführung
- 92: Dichtlippe
- 94: Ummantelungsschlauch
- 96: Kalibrier- und Anpreßvorrichtung
- 98: Scherkanal
- 99: Füllstoff
- 100: Extrusionsvorrichtung
- 102: provisorische Verbindung
- 104: Regelungs- und Steuereinrichtung
- 106: Beförderungsvorrichtung
- 108: Heizelement

## Patentansprüche

1. Extruderkopf (50) zur Verwendung in einer Vorrichtung zur Ummantelung eines Leiters oder einer Leiterbahn (72), mit zumindest einer Extruderdüse (56), die eingangsseitig mit einer Zuleitung (58) zur Zuführung des Ummantelungswerkstoffes verbunden ist und ausgangsseitig in einen Bereich einmündet, an den im Betrieb der zu ummantelnde Leiter oder die zu ummantelnde Leiterbahn angrenzt, **dadurch gekennzeichnet, daß** ausgangsseitig der zumindest einen Extruderdüse (56) ein Auslaß ausgebildet ist, welcher mittels eines Verschlusses (57) verschließbar ist.

2. Extruderkopf nach Anspruch 1, wobei in Zuführrichtung des Ummantelungswerkstoffes unmittelbar vor dem Verschluß (57) eine Bypass-Abzweigung (68) in der Zuleitung (58) oder der Extruderdüse (56) angeordnet ist.

3. Extruderkopf nach Anspruch 2, wobei die Bypass-Abzweigung (68) über eine Leitung mit einem Auffangbehälter verbunden ist.

4. Extruderkopf nach einem der vorhergehenden Ansprüche, wobei der Bereich, in den die Extruderdüse (56) einmündet, eine in dem Extruderkopf (50) angeordnete Aussparung (54) ist, die einen dem Profil entsprechenden Querschnitt aufweist, wobei der Querschnitt der Aussparung um die Dicke der Ummantelung, vorzugsweise unter Berücksichtigung des formabhängigen Extrusionsschrumpfes, größer ausgeführt ist als der Querschnitt des Leiters oder der Leiterbahn (72).

5. Extruderkopf nach einem der vorhergehenden Ansprüche, wobei die Extruderdüse (56) im wesentlichen radial in den Bereich einmündet.

6. Extruderkopf nach einem der vorhergehenden Ansprüche, wobei sich der Querschnitt des Bereiches, in den die Extruderdüse (56) einmündet, in axialer Richtung der Leiterbahn von dem Leiterbahneintrittsquerschnitt zu dem Leitembahnaustrittsquerschnitt hin entsprechend dem in diesem Bereich auftretenden Extrusionsschrumpf verjüngt.

7. Extruderkopf nach einem der vorhergehenden Ansprüche, wobei der Extruderkopf (50) in axialer Richtung des Leiters oder der Leiterbahn (72) eine Länge aufweist, die kleiner ist als ein Zehntel, vorzugsweise kleiner als ein Zwanzigstel eines Radius der Leiterbahnkontur.

8. Extruderkopf nach einem der vorhergehenden Ansprüche, wobei eine Vielzahl von Extruderdüsen (56) am Umfang der Aussparung verteilt so angeordnet sind, daß sich eine gleichmäßige Schichtdicke des Ummantelungswerkstoffes am Umfang des Leiters oder der Leiterbahn ausbildet.

9. Extruderkopf nach einem der vorhergehenden Ansprüche, wobei sich der Bereich, in den die Extruderdüsen einmünden, um einen Druckaufbau zu erzielen, in axialer Richtung des Leiters oder der Leiterbahn von dem Leiterbahneintrittsquerschnitt zu dem Leiterbahnaustrittsquerschnitt hin verjüngt und/oder in diesem Bereich Staubalken und/oder Stauring-Segmente, die vorzugsweise justierbar sind, angeordnet sind.

10. Extruderkopf nach einem der vorhergehenden Ansprüche, wobei der Extruderkopf (50) nach dem Prinzip der Druckummantelung eines Leiters oder einer Leiterbahn ausgelegt ist.

11. Extruderkopf nach einem der Ansprüche 1 bis 9, wobei der Extruderkopf (50) nach dem Prinzip der Schlauchummantelung eines Leiters oder einer Leiterbahn ausgelegt ist.

12. Extruderkopf nach einem der vorhergehenden Ansprüche, wobei in dem Extruderkopf (50) zwei oder mehr Extruderdüsen (56a, 56b) in Axialrichtung hintereinander angeordnet sind.

13. Extruderkopf nach einem der vorhergehenden Ansprüche, wobei als Ummantelungswerkstoff ein Elastomer oder ein Thermoplast verwendet wird, wobei das Elastomer oder der Thermoplast vorzugsweise mit einem Füllstoff versetzt ist.

14. Extrusionsvorrichtung (100) zur Ummantelung eines Leiters oder einer Leiterbahn (72), mit zumindest einem Extruderkopf (50) gemäß einem der Ansprüche 1 bis 13 und einem Förderelement (66) zum Fördern des Ummantelungswerkstoffes.

15. Extrusionsvorrichtung nach Anspruch 14, ferner umfassend eine Regelungs- und Steuereinrichtung (104), die in Abhängigkeit der relativen Position des zu ummantelnden Leiters oder der zu ummantelnden Leiterbahn (72) zu der Extruderdüse (56) ein Öffnen oder Schließen des Verschlusses (57) der Extruderdüse (56) steuert.

16. Extrusionsvorrichtung nach einem der Ansprüche 14 oder 15, wobei die Extrusionsvorrichtung (100) ferner eine Beförderungsvorrichtung (106) umfaßt, die die Leiterbahn (72) durch den Bereich, in den die zumindest eine Extruderdüse (56) einmündet, transportiert.

17. Extrusionsvorrichtung nach einem der Ansprüche 14 oder 15, wobei die Extrusionsvorrichtung (100) ferner eine Haltevorrichtung (81) für die Leiterbahn (72) und eine Beförderungsvorrichtung (83) für den Extruderkopf (56) umfaßt, so daß der Extruderkopf (56) längs der ruhenden Leiterbahn (72) geführt werden kann.

18. Extrusionsvorrichtung nach einem der Ansprüche 14 bis 17, wobei die Extrusionsvorrichtung (100) ferner eine Vorrichtung (98) zur Ausrichtung faserförmigen oder plättchenförmigen Füllstoffes (99) umfaßt.

19. Extrusionsvorrichtung nach einem der Ansprüche 14 bis 18, wobei die Extrusionsvorrichtung (100) ferner ein oder mehrere Heizelemente (108) aufweist, welche die Leiterbahn (72) auf eine Vorheiztemperatur erwärmen.

20. Extrusionsvorrichtung nach einem der Ansprüche 14 bis 19, wobei zumindest zwei Extruderköpfe (56a, 56b) hintereinander angeordnet sind, so daß entsprechend mindestens zwei Schichten Ummantelung auf der Leiterbahn aufgebracht werden können.

21. Extrusionsvorrichtung nach einem der Ansprüche 14 bis 20, wobei am Austritt des Extruderkopfes eine Kalibriervorrichtung (96), vorzugsweise zumindest eine Kalibrierrolle, angeordnet ist.

22. Verfahren zur Ummantelung einer Leiterbahn in einem Extruderkopf gemäß des Ansprüche 1-13, wobei das Verfahren die Schritte umfaßt:
a) Kontinuierliches Fördern eines fließfähigen Ummantelungswerkstoffes aus einem Vorratsreservoir in ein Auffangreservoir;
b) Erzeugen einer Relativbewegung zwischen der Leiterbahn und einem Extruderkopf einer Extrusionsvorrichtung;
c) Führen der Leiterbahn längs des Extruderkopfes, wobei zwischen der Leiterbahn und dem Extruderkopf ein Zwischenraum verbleibt;
d) Einbringen zumindest eines Teils des kontinuierlich geförderten Ummantelungswerkstoffes in den Zwischenraum, Kalibrieren der Dicke des Ummantelungswerkstoffes, wobei der Ummantelungswerkstoff ein mit einem fasrigen oder plättchenförmigen Füllstoff versetztes Elastomer oder Thermoplast ist und wobei während des Aushärtvorgangs des Ummantelungswerkstoffs der Füllstoff in Extrusionsrichtung ausgerichtet wird;
e) Beenden des Einbringens von Ummantelungswerkstoff in den Zwischenraum sobald das Ende des zu beschichtenden Bereichs der Leiterbahn erreicht ist.

## Claims

1. Extruder head (50) for use in a device for the coating of a conductor or a conductor line (72), with at least one extruder die (56), which is connected on the input side to a supply conduit (58) for feeding the coating material and opens out on the output side into a region to which the conductor that is to be coated or the conductor line that is to be coated is adjacent during operation, **characterized in that** an outlet which can be closed by means of a seal (57) is formed on the outlet side of the at least one extruder die (56).

2. Extruder head according to Claim 1, a bypass branch (68) being arranged in the supply conduit (58) or the extruder die (56) directly upstream of the seal (57) in the feeding direction of the coating material.

3. Extruder head according to Claim 2, the bypass branch (68) being connected via a conduit to a collecting container.

4. Extruder head according to one of the preceding claims, the region into which the extruder die (56) opens out being a void (54) which is arranged in the extruder head (50) and has a cross section corresponding to the profile, the cross section of the void being made greater than the cross section of the conductor or the conductor line (72) by the thickness of the coating, preferably allowing for the form-dependent extrusion shrinkage.

5. Extruder head according to one of the preceding claims, the extruder die (56) opening out essentially radially into the region.

6. Extruder head according to one of the preceding claims, the cross section of the region into which the extruder die (56) opens out tapering in the axial direction of the conductor line from the conductor line entry cross section to the conductor line exit cross section in a way corresponding to the extrusion shrinkage occurring in this region.

7. Extruder head according to one of the preceding claims, the extruder head (50) having a length in the axial direction of the conductor or the conductor line (72) which is less than one tenth, preferably less than one twentieth, of a radius of the conductor line contour.

8. Extruder head according to one of the preceding claims, a multiplicity of extruder dies (56) being arranged at the periphery of the void in such a distributed manner that a uniform layer thickness of the coating material forms on the periphery of the conductor or the conductor line.

9. Extruder head according to one of the preceding claims, the region into which the extruder dies open out tapering in the axial direction of the conductor or the conductor line from the conductor line entry cross section to the conductor line exit cross section, and/or restrictor bars and/or restrictor-ring segments, which are preferably adjustable, being arranged in this region, in order to achieve a pressure build-up.

10. Extruder head according to one of the preceding claims, the extruder head (50) being designed on the principle of pressure coating of a conductor or a conductor line.

11. Extruder head according to one of Claims 1 to 9, the extruder head (50) being designed on the principle of tube coating of a conductor or a conductor line.

12. Extruder head according to one of the preceding claims, two or more extruder dies (56a, 56b) being arranged one behind the other in the axial direction in the extruder head (50).

13. Extruder head according to one of the preceding claims, an elastomer or a thermoplastic being used as the coating material, the elastomer or the thermoplastic preferably being mixed with a filler.

14. Extrusion device (100) for the coating of a conductor or a conductor line (72), with at least one extruder head (50) according to one of claims 1 to 13 and a conveying element (66) for conveying the coating material.

15. Extrusion device according to Claim 14, also comprising an automatic control system (104), which controls an opening or closing of the seal (57) of the extruder die (56) in dependence on the relative position of the conductor that is to be coated or the conductor line (72) that is to be coated in relation to the extruder die (56).

16. Extrusion device according to either of Claims 14 and 15, the extrusion device (100) also comprising a transporting device (106), which transports the conductor line (72) through the region into which the at least one extruder die (56) opens out.

17. Extrusion device according to either of Claims 14 and 15, the extrusion device (100) also comprising a holding device (81) for the conductor line (72) and a transporting device (83) for the extruder head (56), so that the extruder head (56) can be guided along the stationary conductor line.

18. Extrusion device according to one of Claims 14 to 17, the extrusion device (100) also comprising a device (98) for aligning filler (99) in the form of fibres or platelets.

19. Extrusion device according to one of Claims 14 to 18, the extrusion device (1) also having one or more heating elements (108), which heat the conductor line (72) to a pre-heating temperature.

20. Extrusion device according to one of Claims 14 to 19, at least two extruder heads (56a, 56b) being arranged one behind other, so that at least two layers of coating can be correspondingly applied on the conductor line.

21. Extrusion device according to one of Claims 14 to 20, the calibrating device (96), preferably at least one calibrating roller, being arranged at the exit of the extruder head.

22. Method for the coating of a conductor line in an extruder head according to Claims 1-13, the method comprising the steps of:
a) continuously conveying a flowable coating material from a storing reservoir into a collecting reservoir;
b) producing a relative movement between the conductor line and an extruder head of an extrusion device;
c) guiding the conductor line along the extruder head, an intermediate space remaining between the conductor line and the extruder head;
d) introducing at least part of the continuously conveyed coating material into the intermediate space calibrating the thickness of the coating material, the coating material being an elastomer or thermoplastic mixed with a filler in the form of fibres or platelets and the filler being aligned in the direction of extrusion during the curing process of the coating material;
e) ending the introduction of coating material into the intermediate space as soon as the end of the region of the conductor line that is to be coated is reached.

## Revendications

1. Tête d'extrusion (50) pour l'utilisation dans un dispositif d'enrobage d'un conducteur ou d'une piste conductrice (72), comprenant au moins une filière d'extrusion (56) qui est connectée du côté de l'entrée à une conduite d'amenée (58) pour fournir la matière d'enrobage et qui débouche du côté de la sortie dans une zone à laquelle, en fonctionnement, le conducteur à enrober ou la piste conductrice à enrober est adajcent(e), **caractérisée en ce que** du côté de la sortie, l'au moins une filière d'extrusion (56) est réalisée sous forme de décharge qui peut être fermée au moyen d'une fermeture (57).

2. Tête d'extrusion selon la revendication 1, dans laquelle dans la direction d'amenée de la matière d'enrobage, directement avant la fermeture (57), un branchement de dérivation (68) est prévu dans la conduite d'amenée (58) ou dans la filière d'extrusion (56).

3. Tête d'extrusion selon la revendication 2, dans laquelle le branchement de dérivation (68) est connecté à un récipient collecteur par le biais d'une conduite.

4. Tête d'extrusion selon l'une quelconque des revendications précédentes, dans laquelle la zone dans laquelle débouche la filière d'extrusion (56) est un évidement (54) disposé dans la tête d'extrusion (50), lequel présente une section transversale correspondant au profil, la section transversale de l'évidement est plus grande, de l'épaisseur de l'enrobage, de préférence en tenant compte du retrait d'extrusion dépendant de la forme, que la section transversale du conducteur ou de la piste conductrice (72).

5. Tête d'extrusion selon l'une quelconque des revendications précédentes, dans laquelle la filière d'extrusion (56) débouche essentiellement radialement dans la zone.

6. Tête d'extrusion selon l'une quelconque des revendications précédentes, dans laquelle la section transversale de la zone dans laquelle débouche la filière d'extrusion (56) se rétrécit dans la direction axiale de la piste de conductrice de la section transversale d'entrée de la piste conductrice vers la section transversale de sortie de la piste conductrice de manière correspondant au retrait d'extrusion se produisant dans cette zone.

7. Tête d'extrusion selon l'une quelconque des revendications précédentes, dans laquelle la tête d'extrusion (50) présente dans la direction axiale du conducteur ou de la piste conductrice (72) une longueur qui est plus petite qu'un dixième de préférence plus petite qu'un vingtième du rayon du contour de la piste conductrice.

8. Tête d'extrusion selon l'une quelconque des revendications précédentes, dans laquelle une pluralité de filières d'extrusion (56) sont disposées de manière répartie sur la périphérie de l'évidement de telle sorte qu'une épaisseur de couche uniforme de la matière d'enrobage se forme sur la périphérie du conducteur ou de la piste conductrice.

9. Tête d'extrusion selon l'une quelconque des revendications précédentes, dans laquelle la zone dans laquelle débouchent les filières d'extrusion, pour obtenir une augmentation de pression, se rétrécit dans la direction axiale du conducteur ou de la piste conductrice depuis la section transversale d'entrée de la piste conductrice vers la section transversale de sortie de la piste de conductrice et/ou des barres de régulation et/ou des segments de bagues de régulation qui peuvent de préférence être ajustés, sont disposés dans cette zone.

10. Tête d'extrusion selon l'une quelconque des revendications précédentes, dans laquelle la tête d'extrusion (50) est conçue selon le principe de l'enrobage sous pression d'un conducteur ou d'une piste conductrice.

11. Tête d'extrusion selon l'une quelconque des revendications 1 à 9, dans laquelle la tête d'extrusion (50) est conçue selon le principe d'une gaine d'enrobage d'un conducteur ou d'une piste conductrice.

12. Tête d'extrusion selon l'une quelconque des revendications précédentes, dans laquelle deux ou plusieurs filières d'extrusion (56a, 56b) sont disposées les unes derrière les autres dans la direction axiale dans la tête d'extrusion (50).

13. Tête d'extrusion selon l'une quelconque des revendications précédentes, dans laquelle on utilise comme matière d'enrobage un élastomère ou un thermoplastique, l'élastomère ou le thermoplastique étant de préférence mélangé à une charge.

14. Dispositif d'extrusion (100) pour l'enrobage d'un conducteur ou d'une piste conductrice (72), comprenant au moins une tête d'extrusion (50) selon l'une quelconque des revendications 1 à 13 et un élément de transport (66) pour transporter la matière d'enrobage.

15. Dispositif d'extrusion selon la revendication 14, comprenant un dispositif de réglage et de commande (104) qui commande en fonction de la position relative du conducteur à enrober ou de la piste conductrice (72) à enrober par rapport à la filière d'extrusion (56) une ouverture ou une fermeture de la fermeture (57) de la filière d'extrusion (56).

16. Dispositif d'extrusion selon l'une quelconque des revendications 14 ou 15, dans lequel le dispositif d'extrusion (100) comprend en outre un dispositif de transport (106) qui transporte la piste conductrice (72) à travers la zone dans laquelle débouche l'au moins une filière d'extrusion (56).

17. Dispositif d'extrusion selon l'une quelconque des revendications 14 ou 15, dans lequel le dispositif d'extrusion (100) comprend en outre un dispositif de fixation (81) pour la piste conductrice (72) et un dispositif de transport (83) pour la tête d'extrusion (56), de sorte que la tête d'extrusion (56) puisse être guidée le long de la piste conductrice immobile (72).

18. Dispositif d'extrusion selon l'une quelconque des revendications 14 à 17, dans lequel le dispositif d'extrusion (100) comprend en outre un dispositif (98) pour orienter une charge (99) fibreuse ou stratifiée.

19. Dispositif d'extrusion selon l'une quelconque des revendications 14 à 18, dans lequel le dispositif d'extrusion (100) présente en outre un ou plusieurs éléments chauffants (108) qui chauffent la piste conductrice (72) à une température de préchauffage.

20. Dispositif d'extrusion selon l'une quelconque des revendications 14 à 19, dans lequel au moins deux têtes d'extrusion (56a, 56b) sont disposées l'une derrière l'autre, de sorte qu'au moins deux couches d'enrobage puissent par conséquent être appliquées sur la piste conductrice.

21. Dispositif d'extrusion selon l'une quelconque des revendications 14 à 20, dans lequel à la sortie de la tête d'extrusion est disposé un dispositif de calibrage(96), de préférence au moins un rouleau de calibrage.

22. Procédé d'enrobage d'une piste conductrice dans une tête d'extrusion selon l'une quelconque des revendications 1 à 13, dans lequel le procédé comprend les étapes suivantes :
a) transport en continu d'une matière d'enrobage coulante d'un réservoir de stockage dans un réservoir de collecte ;
b) production d'un mouvement relatif entre la piste conductrice et une tête d'extrusion d'un dispositif d'extrusion ;
c) guidage de la piste conductrice le long de la tête d'extrusion, un espace intermédiaire subsistant entre la piste conductrice et la tête d'extrusion ;
d) introduction d'au moins une partie de la matière d'enrobage transportée en continu dans l'espace intermédiaire, calibrage de l'épaisseur de la matière d'enrobage, la matière d'enrobage étant un élastomère ou un thermoplastique mélangé à une charge fibreuse ou stratifiée, et la charge étant orientée dans la direction d'extrusion pendant l'opération de durcissement de la matière d'enrobage,
e) achèvement de l'introduction de la matière d'enrobage dans l'espace intermédiaire dès que la fin de la zone à recouvrir de la piste conductrice est atteinte.
